Europäisches Patentamt

European Patent Office

Office européen des brevets

(19)

(11) Numéro de publication : **0 049 651**
**B1**

(12) **FASCICULE DE BREVET EUROPÉEN**

(45) Date de publication du fascicule du brevet :
**07.11.84**

(21) Numéro de dépôt : **81401460.1**

(22) Date de dépôt : **18.09.81**

(51) Int. Cl.³ : **G 01 S   7/28**, G 01 S   7/36,
G 01 S 13/52

(54) **Chaîne de réception de radar cohérent.**

(30) Priorité : **03.10.80 FR 8021225**

(43) Date de publication de la demande :
**14.04.82 Bulletin 82/15**

(45) Mention de la délivrance du brevet :
**07.11.84 Bulletin 84/45**

(84) Etats contractants désignés :
**DE GB IT SE**

(56) Documents cités :
**US-A- 3 299 426**
**IEEE TRANSACTIONS ON AEROSPACE AND ELEC-**
**TRONIC SYSTEMS, vol. AES-11, no. 3, mai 1975, NEW**
**YORK (US) G.B. JORDAN: "Comparison of two major**
**classes of coherent pulsed radar systems", pages**
**363-371**

(73) Titulaire : **LMT RADIO PROFESSIONNELLE**
**46-47, Quai Alphonse Le Gallo**
**F-92103 Boulogne-Billancourt (FR)**

(72) Inventeur : **Petijean, Christian**
**THOMSON-CSF SCPI 173 bld. Haussmann**
**F-75360 Paris Cedex 08 (FR)**
Inventeur : **Marchand, Maurice**
**THOMSON-CSF SCPI 173 bld. Haussmann**
**F-75360 Paris Cedex 08 (FR)**

(74) Mandataire : **Desperrier, Jean-Louis et al**
**THOMSON-CSF SCPI 173, Bld Haussmann**
**F-75379 Paris Cedex 08 (FR)**

Jouve, 18, rue St-Denis, 75001 Paris, France

# 0 049 651

## Description

L'invention concerne une chaîne de réception de radar et plus particulièrement de radar cohérent.

Dans les récepteurs radar actuellement en exploitation, on utilise essentiellement une antenne de réception qui capte le signal reçu de fréquence FR, un oscillateur local de fréquence FL, et, un mélangeur dans lequel sont transposés le signal reçu et le signal issu de l'oscillateur local. L'oscillateur local qui génère la fréquence de transposition est généralement « l'esclave » d'un oscillateur de puissance, par exemple un klystron ou un magnétron, la dépendance étant réalisée à l'aide d'une commande automatique de fréquence (C.A.F.). La sortie du mélangeur fournit un signal à la fréquence intermédiaire FI qui après filtrage est traité par les moyens de détection et visualisation.

Le brevet US 3 299 426 (Learned et al.) décrit un radar cohérent comprenant une chaîne d'émission perfectionnée qui comporte trois oscillateurs et des moyens de mélange et de filtrage qui permettent d'obtenir un signal d'émission dont la fréquence est égale à la différence des fréquences de deux de ces oscillateurs. A la réception un mélangeur permet, à partir du signal reçu et de la plus haute de ces deux fréquences, d'obtenir un signal à fréquence intermédiaire égale à la plus basse des deux fréquences. Ce signal à fréquence intermédiaire est hétérodyné justement par cette plus basse fréquence pour obtenir l'information de phase qui indique les cibles mobiles. La chaîne de réception est donc à simple changement de fréquence et ne comporte aucune disposition particulière contre les brouillages.

De tels récepteurs sont très exposés dans un environnement électronique hostile en raison du brouillage résultant aussi bien des brouilleurs ennemis que des autres radars utilisés dans la même zone d'action. En effet, pour une fréquence donnée de l'oscillateur local, la réception peut être brouillée à la fréquence de travail FR ; mais également à la fréquence de la bande latérale image, ainsi qu'à tous les battements harmoniques de la fréquence intermédiaire, c'est-à-dire les fréquences $FR + (k - 1) \times (FI)$, k étant un nombre entier relatif, $|k|$ (valeur absolue de k) indiquant le rang de l'harmonique. Il faut noter cependant que l'efficacité du brouillage diminue lorsque le rang de l'harmonique augmente.

L'invention propose une chaîne de réception pour laquelle la protection contre le brouillage est largement améliorée par des moyens facilement réalisables et ne présentant pas de difficultés technologiques particulières.

D'autre part, l'invention permet d'augmenter le minimum de sensibilité détectable, d'éliminer les parasites internes, et d'empêcher la dégradation de la réception dans les instants qui suivent l'émission.

Selon une caractéristique de l'invention, le radar cohérent comporte une chaîne d'émission conformément à l'actuelle revendication 1.

Selon une caractéristique de l'invention, la chaîne de réception comporte entre l'antenne de réception et les premiers moyens de filtrage, un préamplificateur à faible bruit qui permet de rendre négligeables les pertes d'insertion dues aux premiers moyens de filtrage.

Selon une autre caractéristique de l'invention, la chaîne de réception comporte des premiers moyens de blocage connectés entre le premier multiplicateur de fréquence et le quatrième mélangeur, et des seconds moyens de blocage associés au second préamplificateur, les entrées de commande des moyens de blocage étant reliées à une sortie de l'oscillateur qui fournit un signal de synchronisation qui déclenche le blocage si, et seulement s'il y a émission.

Les objets et caractéristiques de la présente invention apparaîtront plus clairement à la lecture de la description suivante d'un exemple de réalisation, cette description étant faite en relation avec une figure qui représente un exemple de radar Doppler cohérent conforme à l'invention.

Ce radar comporte une chaîne d'émission 1 et une chaîne de réception 2.

La chaîne d'émission 1 comporte un oscillateur 10 très stable qui fournit un signal de fréquence F0. La sortie de cet oscillateur 10 est reliée à l'entrée d'un élément 9 de mise en forme qui comporte des moyens de modulation, des moyens de codage et/ou des moyens d'étalement de spectre suivant le type d'émission choisi. La sortie de l'oscillateur 10 est également reliée à l'entrée du circuit 11 multiplicateur de fréquence de rapport N1 dont la sortie fournit un signal de fréquence F1. La sortie de l'élément 9 est reliée à l'une des entrées d'un mélangeur 12 ; l'autre entrée de 12 est reliée à la sortie du multiplicateur 11.

La sortie du circuit 11 multiplicateur est également reliée à l'entrée d'un circuit 13 multiplicateur de fréquence de rapport N2 variable, dont la sortie fournit un signal de fréquence F2.

La sortie du circuit 13 multiplicateur est reliée à l'une des entrées d'un mélangeur 14 dont l'autre entrée est reliée à la sortie du mélangeur 12 qui fournit un signal de fréquence F0 + F1.

La sortie du mélangeur 14 est reliée à une antenne d'émission 15 à laquelle il fournit un signal de fréquence F3 égale à F0 + F1 + F2.

Le mélangeur 12 en raison de sa constitution, laisse passer des raies parasites de fréquence F0 + kF1 par l'entrée qui est reliée à la sortie du multiplicateur 11. Pour protéger le radar contre ce parasite interne, on place un filtre passe-bande 16, centré sur la fréquence F1 et le plus étroit possible, entre la sortie du multiplicateur 11 et l'entrée du mélangeur 12.

Pour les mêmes raisons, on place un filtre passe-bande 17, centré sur la fréquence F2, entre la sortie du multiplicateur 13 et l'entrée du mélangeur 14.

La fréquence d'émission F3 est générée par mélange de signaux qui sont tous élaborés à partir du

2

signal de référence de fréquence F0 issu de l'oscillateur 10 et par conséquent, les signaux de fréquence F1, F2 et F3 sont cohérents. Le signal d'émission de fréquence F3 varie dans une bande de fréquence de largeur $\Delta$ qui dépend de la variation du rapport N2 du circuit 13.

Dans un exemple particulier de réalisation, on a :

F0 = 60 MHz ;
F1 = N1 $\times$ F0 = 1 800 MHz, F0 + F1 = 1 860 MHz ;
F2 = N2 $\times$ F1, F2 varie de 7 440 MHz à 8 040 MHz ;
F3 = F0 + F1 + F2, F3 varie de 9 300 MHz à 9 900 MHz et
$\Delta$ est égal à 600 MHz.

La chaîne de réception 2 comporte une antenne de réception 20 qui reçoit un signal de fréquence FR comprise entre 9 300 MHz et 9 900 MHz.

L'antenne 20 est reliée à l'entrée d'un préamplificateur 21 à faible bruit et de gain A1 dont la sortie est reliée à des premiers moyens de filtrage passe-bande constitués par un filtre passe-bande 22 dont la largeur de bande $\Delta$ correspond à la bande de fréquences émises, c'est-à-dire 9 300 MHz à 9 900 MHz dans l'exemple indiqué ci-dessus.

Le rôle de l'amplificateur 21 est de rendre négligeables les pertes d'insertion du filtre 22 dans sa contribution au facteur de bruit global. Dans l'exemple particulier, le gain A1 de l'amplificateur 21 doit être suffisamment élevé, de l'ordre de 20 dB.

La chaîne de réception 2 comporte des premiers moyens de transposition constitués par un mélangeur 23 dont l'une des entrées est reliée à la sortie du circuit 13 multiplicateur qui fournit le signal de fréquence F2. On réalise ainsi une première transposition, le mélangeur 23 fournissant en sortie un signal de fréquence FR-F2.

La chaîne de réception 2 comporte un second préamplificateur 24 de gain A2 dont l'entrée est reliée à la sortie du mélangeur 23 et dont la sortie est reliée à des deuxièmes moyens de filtrage passe-bande constitués par un filtre passe-bande 25 de largeur de bande $\delta$ et centré sur la fréquence F0 + F1. Dans l'exemple, F0 + F1 est égal à 1 860 MHz et $\delta$ est choisi égal à 40 MHz, cette valeur étant la valeur maximale tolérable pour rejeter l'image d'un battement à plus ou moins 60 MHz.

Le rôle de l'amplificateur 24 vis-à-vis du filtre 25 est identique à celui de l'amplificateur 21 vis-à-vis du filtre 22.

La chaîne de réception 2 comporte des seconds moyens de transposition constitués par un mélangeur 26 dont l'une des entrées est reliée à la sortie du filtre 25 et dont l'autre entrée est reliée via un filtre passe-bande 29 à la sortie du circuit 11 multiplicateur qui fournit le signal de fréquence F1. On réalise ainsi une seconde transposition, le mélangeur 26 fournissant en sortie un signal de fréquence FR-F2-F1. Le filtre passe-bande 29 est centré sur la fréquence F1 et permet d'éliminer tout résidu de parasites subsistant et plus particulièrement celui de fréquence F0 + F1.

La chaîne de réception comporte des troisièmes moyens de filtrage passe-bande constitués par un filtre passe-bande 27 de largeur d et centré sur la fréquence F0, dont l'entrée est reliée à la sortie du mélangeur 26 et dont la sortie est reliée à des moyens 28 de traitement et de visualisation des informations dans le signal issu du mélangeur 26. Ces moyens sont connus en eux-mêmes et comportent par exemple une indication du type PPI. Dans l'exemple particulier, F0 est égal à 60 MHz et d est égal à 4 MHz.

Enfin, la chaîne de réception comporte des premiers moyens de blocage 30 constitués, par exemple, par un atténuateur à diodes PIN et placés entre le filtre passe-bande 29 et le mélangeur 26, et des seconds moyens de blocage associés au préamplificateur 21. Ces moyens de blocage sont commandés par le même signal de synchronisation issu de l'élément 9, de telle sorte qu'il y ait blocage de la chaîne de réception, à l'entrée en 21 et en 30, chaque fois que la chaîne d'émission émet une impulsion ou en séquence, et, de telle sorte que le blocage cesse et que le récepteur soit efficace avec sa pleine sensibilité dès que l'émission a cessé.

Grâce à cette chaîne de réception avec double transposition et triple filtrage successifs, la fréquence utile F0 est exempte de fréquences parasites. En effet, la fréquence d'un brouilleur éventuel ne peut être efficace qu'à la fréquence utile de réception et dans la bande du filtre le plus étroit, c'est-à-dire dans notre cas particulier, le filtre à 60 MHz de bande 4 MHz.

Le rapport R-R =
BE/BB = bande de fréquence exploitées/bande de fréquences susceptibles d'être brouillées

est alors égal à $\Delta$/d. Dans notre exemple, R = 600/4 = 150, ce qui correspond à environ 22 dB de protection.

En dehors de la protection contre les brouilleurs, la double transposition utilisée dans cette chaîne de réception permet d'augmenter la sensibilité du récepteur, c'est-à-dire d'augmenter la valeur du minimum détectable d'approximativement 3 dB.

En outre, aucun parasite interne n'est à craindre grâce aux filtrages efficaces réalisés par les filtres 16, 17 et 29.

3

Enfin, la sensibilité du récepteur est améliorée en ce qui concerne les zones proches grâce au blocage de la chaîne de réception pendant les temps d'émission, ce qui permet d'empêcher la dégradation de la sensibilité du récepteur pendant les instants qui suivent l'émission.

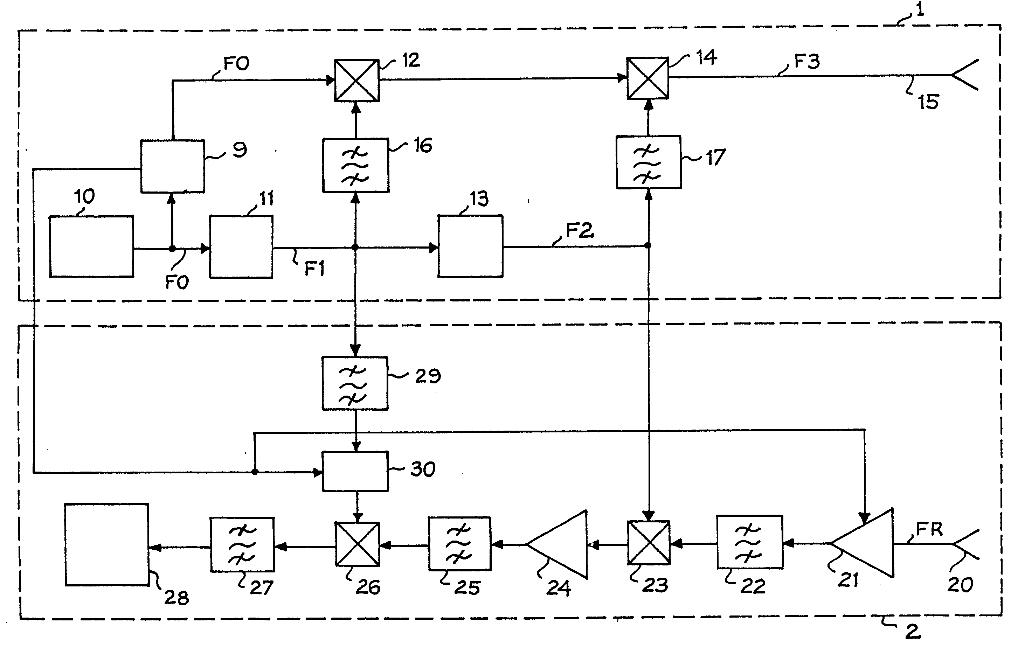

**Revendications**

1. Chaîne de réception de radar cohérent dont la chaîne d'émission (1) comporte au moins deux moyens d'oscillation cohérents entre eux, le premier (11) fournissant un signal de fréquence F1 et le second (13) un signal de fréquence F2, et permet d'émettre un signal de fréquence F3 correspondant à une combinaison linéaire d'au moins les deux fréquences F1 et F2, ladite chaîne de réception comportant au moins des premiers moyens de transposition (23) recevant le signal de réception à la fréquence F3 et le signal de fréquence F2 et délivrant un signal de fréquence F3-F2, des seconds moyens de transposition (26) recevant le signal de sortie des premiers moyens de transposition et le signal de fréquence F1 et délivrant un signal de fréquence F3-F2-F1, et des moyens de traitement et de visualisation (28) du signal de sortie des seconds moyens de transposition, caractérisé en ce que, la chaîne d'émission (1) comportant un oscillateur de référence (10) fournissant un signal de référence de fréquence F0 de l'ordre de quelques dizaines de MHz, les fréquences F1 et F2 étant obtenues par multiplication de la fréquence F0 et ayant respectivement des valeurs de l'ordre de 2 et 8 mille MHz, la fréquence F2 pouvant varier dans une bande de fréquence de largeur Δ de l'ordre de quelques centaines de MHz, et la fréquence F3 étant égale à F0 + F1 + F2, la chaîne de réception (2) opère un double changement de fréquence et comprend :
— un premier filtre passe-bande (22) pour filtrer les signaux de réception à la fréquence variable F3 ; ce premier filtre ayant une largeur de bande égale à Δ pour éliminer les signaux dont la fréquence est en dehors des limites de variation de F3 ; Δ définissant la bande de fréquence pouvant être exploitées ;
— un premier mélangeur (23) formant les premiers moyens de transposition pour mélanger le signal de sortie du premier filtre passe-bande et le second signal à la fréquence F2 et délivrer un premier signal à fréquence intermédiaire ayant au moins une composante de fréquence $F3 - F2 = F0 + F1$ ;
— un second filtre passe-bande (25) pour filtrer le premier signal à fréquence intermédiaire ; ce second filtre étant centré sur la fréquence F0 + F1 et ayant une largeur de bande δ légèrement inférieure à F0 pour éliminer les brouillages à la fréquence image ;
— un second mélangeur (26) formant les seconds moyens de transposition pour mélanger le signal de sortie du second filtre et le premier signal à la fréquence F1 et délivrer un second signal à fréquence intermédiaire ayant au moins une composante de fréquence F0 ;
— un troisième filtre passe-bande (27) pour filtrer le second signal à fréquence intermédiaire et le délivrer aux moyens de traitement et de visualisation ; ce second filtre étant centré sur la fréquence F0 et ayant une largeur de bande d de l'ordre de quelques MHz ; d définissant la bande de fréquence pouvant être brouillée et le rapport Δ/d donnant la protection apportée contre les brouillages par cette structure.

2. Chaîne de réception de radar cohérent selon la revendication 1, caractérisée en ce qu'elle comporte avant le premier filtre (22), un préamplificateur (21) à faible bruit, pour rendre négligeables les pertes d'insertion dues à ce premier filtre.

3. Chaîne de réception de radar cohérent selon la revendication 2, caractérisée en ce qu'elle comporte des premiers moyens (30) pour bloquer l'application du premier signal à la fréquence F1 au second mélangeur (26), et des seconds moyens de blocage associés au préamplificateur (21) ; les entrées de commande de ces moyens de blocage étant reliées à une sortie d'un élément (9) de mise en forme qui fournit un signal de synchronisation lequel déclenche le blocage quand il y a émission.

**Claims**

1. Coherent radar receiver chain having a transmitter chain (1) comprising at least two oscillator means which are coherent with each other, the first (11) supplying a signal of the frequency F1 and the second (13) supplying a signal of the frequency F2, and permitting to transmit a signal of the frequency F3 corresponding to a linear combination of at least the two frequencies F1 and F2, said receiver chain comprising at least first transposition means (23) receiving the reception signal at the frequency F3 and the signal of frequency F2 and supplying a signal of the frequency F3-F2, second transposition means (26) receiving the output signal of the first transposition means and the signal of frequency F1, and supplying a signal of the frequency F3-F2-F1, and means (28) for processing and visualization of the output signal of the second transposition means, characterized in that, the transmitter chain (1) comprising a reference oscillator (10) supplying a reference signal of the frequency F0 of the order of some ten MHz, the frequencies F1 and F2 being obtained by multiplication of the frequency F0 and having values of the order of 1 and 8 thousand MHz, respectively, the frequency F2 being allowed to vary within a frequency range of the width Δ of the order of some hundred MHz, and the frequency F3 being equal to F0 + F1 + F2, the receiver chain (2) operates a double frequency change and comprises :
— a first band-pass filter (22) for filtering the reception signals at the variable frequency F3 ; this first filter having a bandwidth equal to Δ for elimination of the signals the frequency of which is outside the variation limits of F3 ; Δ defining the useful frequency band ;
— a first mixer (23) forming the first transposition means for mixing the output signal of the first band-pass filter with the second signal of the frequency F2 and supplying a first intermediate frequency signal having at least one component of the frequency F3 − F2 = F0 + F1 ;

— a second band-pass filter (25) for filtering the first intermediate frequency signal ; this second filter being centered on the frequency F0 + F1 and having a band width δ which is slightly less than F0 to eliminate interferences at the frame frequency ;

— a second mixer (26) forming the second transposition means for mixing the output signal of the second filter with the first signal of the frequency F1 and supplying a second intermediate frequency signal having at least one component of the frequency F0 ;

— a third band-pass filter (27) for filtering the second intermediate frequency signal and supplying the same to said processing and visualization means ; this second filter being centered on the frequency F0 and having a bandwidth d of the order of several MHz ; d defining the frequency band susceptible to be disturbed, and the ratio Δ/d defining the protection offered by this structure against interferences.

2. Coherent radar reception chain according to claim 1, characterized in that it comprises a low noise pre-amplifier (21) preceding the first filter (22) in order to render negligible the insertion losses due to this first filter.

3. Coherent radar reception chain according to claim 2, characterized in that it comprises first means (30) for disabling the application of the first signal of frequency F1 to the second mixer (26), and second disabling means associated with the preamplifier (21) ; the control inputs of these disabling means being connected to an output of a shaping member (9) supplying a synchronization signal triggering the disabling operation upon transmission.

**Ansprüche**

1. Kohärentradar-Empfängeranordnung, deren Sendeanordnung (1) wenigstens zwei untereinander kohärente Oszillatoreinrichtungen umfaßt, von denen der erste (11) ein Signal der Frequenz F1 und der zweite (13) ein Signal der Frequenz F2 abgibt, und die Aussendung eines Signals der Frequenz F3 gestattet, die einer linearen Kombination wenigstens der zwei Frequenzen F1 und F2 entspricht, wobei die Empfängeranordnung wenigstens erste Umsetzmittel (23) umfaßt, welche das Empfangssignal auf der Frequenz F3 sowie das Signal der Frequenz F2 empfangen und ein Signal der Frequenz F3-F2 abgeben, zweite Umsetzmittel (26) umfaßt, welche das Ausgangssignal der ersten Umsetzmittel und das Signal der Frequenz F1 empfangen und ein Signal der Frequenz F3-F2-F1 abgeben, und Mittel (28) für die Verarbeitung und Sichtdarstellung des Ausgangssignals der zweiten Umsetzmittel enthält, dadurch gekennzeichnet, daß die Empfängeranordnung (2), bei einer Sendeanordnung (1), welche einen Referenzoszillator (10) enthält, der ein Referenzsignal der Frequenz F0 in der Größenordnung von einigen zehn MHz abgibt, wobei die Frequenzen F1 und F2 durch Multiplikation der Frequenz F0 erhalten werden und einen Wert in der Größenordnung von zwei- bzw. achttausend MHz aufweisen, wobei ferner die Frequenz F2 einem Frequenzband der Breite Δ in der Größenordnung von einigen hundert MHz variieren kann und die Frequenz F3 gleich F0 + F1 + F2 ist, eine doppelte Frequenzänderung ausführt und enthält :

— ein erstes Bandpaßfilter (22) zum Ausfiltern der Empfangssignale mit der variablen Frequenz F3 ; wobei dieses erste Filter eine Bandbreite besitzt, die gleich Δ ist, um diejenigen Signale zu unterdrücken, deren Frequenz außerhalb der Variationsgrenzen von F3 liegt ; wobei Δ das nutzbare Frequenzband definiert ;

— einen ersten Mischer (23), welcher die ersten Umsetzmittel bildet, um das Ausgangssignal der ersten Bandpaßfilters mit dem zweiten Signal der Frequenz F2 zu mischen und ein erstes Zwischenfrequenzsignal abzugeben, das wenigstens eine Komponente der Frequenz F3-F2 gleich F0 + F1 enthält ;

— ein zweites Bandpaßfilter (25) zum Ausfiltern des ersten Zwischenfrequenzsignals ; wobei dieses zweite Filter auf die Frequenz F0 + F1 zentriert ist und eine Bandbreite δ besitzt, die etwas kleiner als F0 ist, um die bildfrequenten Störungen zu eliminieren ;

— einen zweiten Mischer (26), der die zweiten Umsetzmittel bildet, zur Mischung des Ausgangssignals des zweiten Filters mit dem ersten Signal der Frequenz F1 und zur Erzeugung eines zweiten Zwischenfrequenzsignals, das wenigstens eine Komponente der Frequenz F0 enthält ;

— ein drittes Bandpaßfilter (27) zum Ausfiltern des zweiten Zwischenfrequenzsignals und Abgeben desselben an die Mittel zur Verarbeitung und Sichtdarstellung ; wobei dieses zweite Filter auf die Frequenz F0 zentriert ist und eine Bandbreite d in der Größenordnung von einigen MHz besitzt ; wobei d das Frequenzband definiert, welches gestört werden kann, und das Verhältnis Δ/d den durch diese Struktur gegebenen Schutz gegen Störungen angibt.

2. Kohärentradar-Empfängeranordnung nach Anspruch 1, dadurch gekennzeichnet, daß sie vor dem ersten Filter (22) einen Vorverstärker (21) mit niedrigem Rauschen umfaßt, um die auf diesem ersten Filter beruhenden Einfügungsverluste vernachlässigbar zu machen.

3. Kohärentradar-Empfängeranordnung nach Anspruch 2, dadurch gekennzeichnet, daß sie erste Mittel (30) zum Sperren der Anlegung der ersten Signals der Frequenz F1 an den zweiten Mischer (26) sowie zweite, dem Vorverstärker (21) zugeordnete Sperrmittel umfaßt ; wobei die Steuereingänge dieser Sperrmittel mit dem Ausgang eines Formgebungselementes (9) verbunden sind, welches ein Synchronisationssignal abgibt, durch das die Sperrung ausgelöst wird, wenn gesendet wird.